# EUROPÄISCHE PATENTSCHRIFT

(11) **EP 1 964 653 B1**
(45) Veröffentlichungstag und Bekanntmachung des Hinweises auf die Patenterteilung: **17.02.2010**
(21) Anmeldenummer: 08003776.5
(22) Anmeldetag: 29.02.2008
(51) Int. Cl.: B27B 5/065, B23D 47/04

(54) **Plattenaufteilanlage zum Aufteilen von plattenförmigen Werkstücken, sowie Verfahren zu deren Betrieb**
Plate partitioning facility for partitioning plate-shaped workpieces and method for its operation
Installation de répartition de plaques destinée à la répartition de pièces à usiner en forme de plaques et son procédé de fonctionnement

(30) Priorität: 02.03.2007 DE 102007010207
(43) Veröffentlichungstag der Anmeldung: 03.09.2008
(73) Patentinhaber: HOLZMA Plattenaufteiltechnik GmbH, 75365 Calw-Holzbronn (DE)
(72) Erfinder: Hartmann, Gerhard, 72224 Ebhausen-Rotfelden (DE); Gröning, Peter, 75392 Deckenpfronn (DE); Ziegler, Werner, 75365 Calw (DE)
(74) Vertreter: Knapp, Thomas

(56) Entgegenhaltungen:
- EP-A- 1 510 276
- CH-A5- 574 314
- DE-A1- 3 716 651
- DE-A1- 4 425 008
- US-B1- 6 546 834

## Beschreibung

Die Erfindung betrifft eine Plattenaufteilanlage zum Aufteilen von plattenförmigen Werkstücken nach dem Oberbegriff des Anspruchs 1, sowie ein Verfahren zu deren Betrieb nach dem Oberbegriff des nebengeordneten Patentanspruchs.

Die EP 1 510 276 A1 , gemäß dem Oberbegriff des Anspruchs 1, beschreibt eine Plattenaufteilanlage mit zwei ineinander greifenden Vorschubeinrichtungen. Die eine Vorschubeinrichtung umfasst ein den Vorschubbereich überspannendes Portal, welches einen ersten Träger einer ersten Vorschubeinrichtung bildet und an dem mehrere erste Greifeinrichtungen befestigt sind. Ein seitlicher Laufwagen bildet einen zweiten Träger einer zweiten Vorschubeinrichtung und an diesem zweiten Laufwagen ist ein in den Vorschubbereich von der Seite einfahrbarer Halter mit mehreren zweiten Greifeinrichtungen befestigt. Der zweite Breitenbereich, in dem die zweite Greifeinrichtung angeordnet ist, überlappt sich dabei mit dem ersten Breitenbereich, in dem die erste Vorschubeinrichtung beziehungsweise die ersten Greifeinrichtungen angeordnet sind. Die erste und die zweite Vorschubeinrichtung können unabhängig voneinander bewegt werden, so dass die beiden Vorschubeinrichtungen gleichzeitig jeweils an einem Plattenstapel angreifen und diesen beispielsweise einer Säge zuführen können. Damit die zweite Vorschubeinrichtung von der ersten Vorschubeinrichtung nicht behindert wird, können die Greifeinrichtungen der ersten Vorschubeinrichtungen nach oben weggeschwenkt werden.

Nachteilig an der bekannten Plattenaufteilanlage ist ihre technische Komplexität, die zum einen hohe Wartungskosten verursacht und zum anderen bereits in der Herstellung teuer ist.

CH 574 314 A5 beschreibt eine Plattenaufteilanlage mit zwei Zuführtischen auf gegenüber liegenden Seiten der Sägelinie und zwei in entgegengesetzter Richtung arbeitenden vorschubeinrichtungen. DE 44 25 008 A1 beschreibt eine Ablängsäge mit zwei nebeneinander angeordneten und gleich ausgebildeten separaten Zuführtischen mit entsprechenden Vorschubeinrichtungen. DE 37 16 651 A1 beschreibt eine verschwenkbare Spannzange.

Die vorliegende Erfindung hat die Aufgabe, eine Plattenaufteilanlage zu schaffen, welche möglichst flexibel eingesetzt werden kann bei gleichzeitig niedrigen Herstell- und Betriebskosten.

Diese Aufgabe wird durch eine Plattenaufteilanlage mit den Merkmalen des Anspruchs 1 und durch ein Verfahren mit den Merkmalen des nebengeordneten Patentanspruchs gelöst. Vorteilhafte Weiterbildungen sind darüber hinaus in Unteransprüchen genannt.

Erfindungsgemäß wurde erkannt, dass fast alle gängigen Schnittbilder beziehungsweise Aufteilpläne realisiert werden können, auch wenn sich die Breitenbereiche nicht überlappen und die zweite Greifeinrichtung nicht aus dem Vorschubbereich herausbewegt werden kann, sondern ständig in dem zweiten Breitenbereich angeordnet ist. Dies führt zu einer wesentlichen Vereinfachung der Plattenaufteilanlage, durch die bereits bei der Herstellung Kosten gespart werden. Darüber hinaus kann die erfindungsgemäße Plattenaufteilanlage auch kostengünstiger betrieben werden. Dadurch, dass sich die beiden Breitenbereiche nicht überlappen, wird die Höhe des Freiraums unterhalb der zweiten Greifeinrichtung nur noch durch die maximale Höhe eines von der ersten Greifeinrichtung greifbaren Stapels von Werkstücken bestimmt und nicht von der Höhe der ersten Greifeinrichtung selbst. Auch dies trägt zur Vereinfachung der Plattenaufteilanlage bei. Die Plattenaufteilanlage kann ferner aus Standardkomponenten aufgebaut werden, was ihre Herstell- ebenso wie die Wartungskosten senkt. Erste und zweite Vorschubeinrichtungkönnen außerdem auf einfache Weise, insbesondere bei einer gewissen Länge der Vorrichtung, so angeordnet werden, dass sie unabhängig voneinander und "parallel", also gleichzeitig arbeiten können.

In einer ersten Weiterbildung der erfindungsgemäßen Plattenaufteilanlage wird vorgeschlagen, dass der erste Träger und der zweite Träger an einem parallel zur Vorschubrichtung angeordneten gemeinsamen dritten Träger verfahrbar gehalten sind. Bei dem dritten Träger kann es sich beispielsweise um ein übliches Doppel-T-Profil handeln. Der Aufbau der Anlage wird hierdurch nochmals vereinfacht.

Der erste Träger kann in einer Nut auf der Oberseite und der zweite Träger in einer Schiene an der Unterseite des dritten Trägers gehalten sein. Damit wird eine einfache Abstützung des üblicherweise deutlich größeren ersten Trägers geschaffen, und eine kompakte und präzise Halterung des üblicherweise vergleichsweise kleinen zweiten Trägers.

Besonders bevorzugt wird, wenn mindestens eine der ersten Greifeinrichtungen, die zu der zweiten Greifeinrichtung benachbart ist, gegenüber dem ersten Träger von einer abgesenkten Vorschubstellung in eine angehobene Ruhestellung und zurück bewegt werden kann und wenn die Höhe eines Freiraums unterhalb der ersten Greifeinrichtung in deren angehobener Ruhestellung mindestens der maximalen Höhe eines von der zweiten Greifeinrichtung greifbaren Stapels von Werkstücken entspricht. Damit kann der von der zweiten Vorschubeinrichtung gegriffene Werkstückstapel in den ersten Breitenbereich ragen, und die zweite Vorschubeinrichtung kann diesen Werkstückstapel dennoch beliebig und vollkommen unabhängig von der ersten Vorschubeinrichtung bewegen. Dies erhöht nochmals erheblich die Flexibilität der erfindungsgemäßen Plattenaufteilanlage. Die Greifeinrichtungen beider Vorschubeinrichtungen werden dabei nach oben in die Ruhestellung bewegt, so dass von dieser Funktion der Raum unterhalb des Vorschubbereichs nicht beeinflusst wird. Die Auflageebene, auf der die plattenförmigen Werkstücke aufliegen, kann somit vergleichsweise niedrig sein, was die Bedienung erleichtert.

In Weiterbildung hierzu wird vorgeschlagen, dass die Bewegungsrichtung der ersten Greifeinrichtung von der Vorschubstellung in die Ruhestellung, in Vorschubrichtung gesehen, nach schräg hinten verläuft. Die sich in der Ruhestellung befindenden Greifeinrichtungen sind somit gegenüber den anderen ersten Greifeinrichtungen, in Vorschubrichtung gesehen, nach hinten versetzt angeordnet. Die erste Vorschubeinrichtung kann somit auch mit in Ruhestellung befindlichen ersten Greifeinrichtungen bis ganz nahe beispielsweise an eine Sägelinie herangefahren werden, ohne dass die in Ruhestellung befindlichen ersten Greifeinrichtungen mit einem im Bereich der Sägelinie vorhandenen Druckbalken kollidieren. Letztlich wird durch diese Maßnahme ein präziser Schnitt gewährleistet.

Vorgeschlagen wird ferner, dass der zweite Breitenbereich eine Breite von weniger als 10%, insbesondere eine Breite von weniger als 4 % des Vorschubbereichs aufweist. Entsprechend fällt die zweite Vorschubeinrichtung klein und somit leicht und konstruktiv einfach aus. Dennoch können mit einer solchermaßen gestalteten Plattenaufteilanlage fast alle gängigen Schnittmuster beziehungsweise Aufteilpläne realisiert werden.

Eine weitere Ausführungsform sieht vor, dass die Plattenaufteilanlage Teil einer Winkelanlage ist. Dort kommen die erhöhten Taktzahlen besonders gut zur Geltung.

Ferner können der erste Träger und der zweite Träger nebeneinander angeordnet sein, die beiden Träger überlappen sich also nicht, und zwar derart, dass der erste Träger seitlich vom zweiten Breitenbereich angeordnet ist. Dies vereinfacht die Konstruktion.

Verfahrenstechnisch vorteilhaft ist es, wenn die zweite Vorschubeinrichtung in der Ruhestellung der zweiten Greifeinrichtung in eine Position bewegt wird, die in der Nähe eines Bearbeitungsbereichs, insbesondere in der Nähe einer Sägelinie, liegt. Damit werden Zeit und Energie gespart, wenn vom Benutzer der Plattenaufteilanlage ein Werkstück an die zweite Vorschubeinrichtung "angekoppelt" werden soll.

Nachfolgend wird ein Ausführungsbeispiel der vorliegenden Erfindung unter Bezugnahme auf die beiliegende Zeichnung näher erläutert. In der Zeichnung zeigen:
- Figur 1: eine Draufsicht auf eine Plattenaufteilanlage mit einer ersten Vorschubeinrichtung und einer zweiten Vorschubeinrichtung in einer Ausgangslage;
- Figur 2: eine perspektivische Darstellung der zweiten Vorschubeinrichtung und eines Teils der ersten Vorschubeinrichtung;
- Figur 3: eine Ansicht ähnlich Figur 1 der Plattenaufteilanlage in einem zweiten Betriebszustand;
- Figur 4: eine Darstellung ähnlich Figur 1 der Plattenaufteilanlage in einem dritten Betriebszustand;
- Figur 5: eine Darstellung ähnlich Figur 1 der Plattenaufteilanlage in einem vierten Betriebszustand;
- Figur 6: eine Darstellung ähnlich Figur 1 der Plattenaufteilanlage in einem fünften Betriebszustand;
- Figur 7: eine Darstellung ähnlich Figur 1 der Plattenaufteilanlage in einem sechsten Betriebszustand; und
- Figur 8: eine schematische Gesamtdarstellung einer alternativen Ausführungsform einer Plattenaufteilanlage.

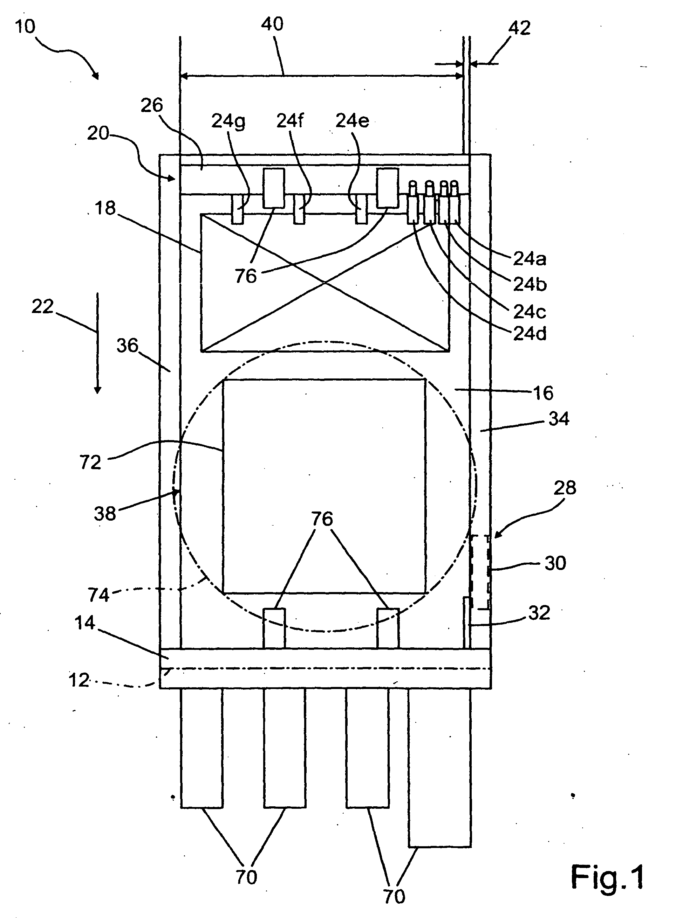

Eine Plattenaufteilanlage trägt in Figur 1 insgesamt das Bezugszeichen 10. Sie umfasst eine Säge, welche in Figur 1 jedoch nicht dargestellt ist. Lediglich die Sägelinie ist durch eine strichpunktierte Linie mit dem Bezugszeichen 12 angedeutet. Oberhalb der Sägelinie 12 ist ein Druckbalken 14 vorhanden.

Zu der Plattenaufteilanlage 10 gehört ferner ein Auflagetisch 16, der beispielsweise durch eine Vielzahl von Rollen (nicht dargestellt) gebildet wird. Auf dem Auflagetisch 16 liegt bei der in Figur 1 dargestellten Ausgangskonfiguration der Plattenaufteilanlage 10 ein Stapel von plattenförmigen Werkstücken 18a. Dieser kann von einer ersten Vorschubeinrichtung 20 in Vorschubrichtung (Pfeil 22) und auch entgegen der Vorschubrichtung 22 bewegt werden, indem der Werkstückstapel 18 von ersten Greifeinrichtungen 24a bis 24g gegriffen wird. Diese sind an einem ersten Träger 26 angebracht.

Die Plattenaufteilanlage 10 umfasst ferner eine zweite Vorschubeinrichtung 28, die in der in Figur 1 dargestellten Ruheposition ganz in der Nähe zu der Sägelinie 12 angeordnet ist. Die zweite Vorschubeinrichtung 28 umfasst einen zweiten Träger 30, an dem seitlich, zum Auflagetisch 16 hin, eine zweite Greifeinrichtung 32 befestigt ist.

Der zweite Träger 30 ist, wie weiter unten noch stärker im Detail erläutert werden wird, an der Unterseite eines dritten Trägers 34 befestigt, der sich parallel zur Vorschubrichtung 22 erstreckt und den Auflagetisch 16 seitlich begrenzt. Parallel zum dritten Träger 34 ist auf der anderen Seite des Auflagetisches 16 ein vierter Träger 36 vorhanden. Der erste Träger 26 ist in der Art eines Portals in noch näher darzustellender Art und Weise auf den Oberseiten des dritten Trägers 34 beziehungsweise des vierten Trägers 36 gelagert.

Quer zur Vorschubrichtung 22 wird durch den Auflagetisch 16 und die beiden Träger 34 und 36 ein Vorschubbereich 38 definiert, in dem die von den Vorschubeinrichtungen 20 und 28 zu bewegenden Werkstücke 18 angeordnet werden können. Der Vorschubbereich 38 weist wiederum quer zur Vorschubrichtung 22 einen ersten Breitenbereich 40 und einen zweiten Breitenbereich 42 auf, die in Figur 1 durch entsprechende Breitenpfeile gekennzeichnet sind. Der erste Breitenbereich 40 ist dadurch definiert, dass in ihm die ersten Greifeinrichtungen 24a bis 24g angeordnet sind, und der zweite Breitenbereich 42 ist dadurch definiert, dass in ihm die zweite Greifeinrichtung 32 angeordnet ist. Man erkennt aus Figur 1, dass der erste Breitenbereich 40 direkt an den zweiten Breitenbereich 42 angrenzt, mit diesem jedoch nicht überlappt. Ferner erkennt man aus Figur 1, dass der zweite Träger 30 seitlich außerhalb von dem Vorschubbereich 38 beziehungsweise von dem zweiten Breitenbereich 42 angeordnet ist.

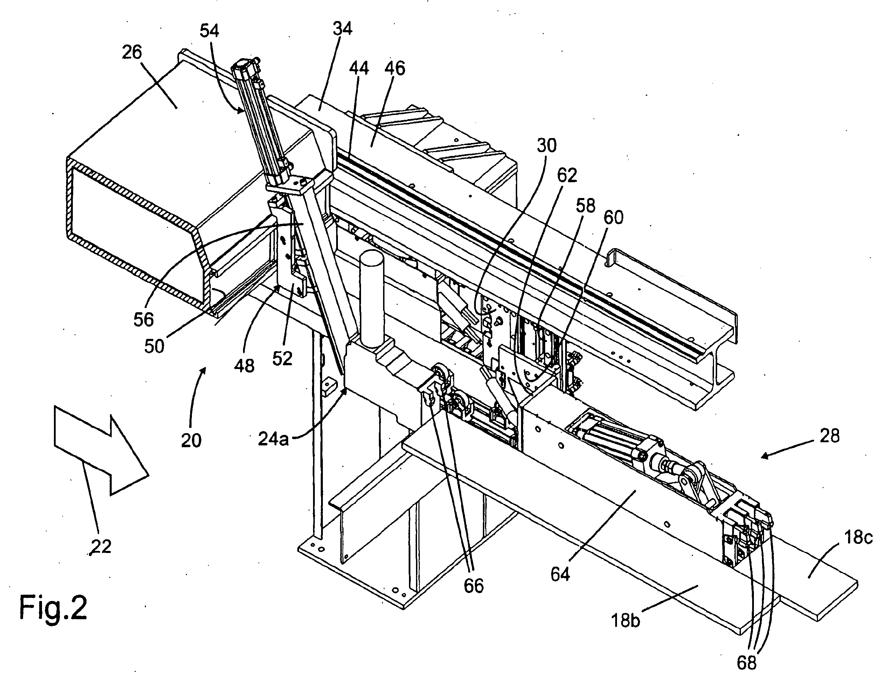

Die erste Vorschubeinrichtung 20 und die zweite Vorschubeinrichtung 28 werden nun unter Bezugnahme auf Figur 2 näher erläutert: man erkennt aus Figur 2, dass der erste Träger 26 seitlich vom dritten Träger 34 angeordnet ist und mittels einer nicht sichtbaren Rollenauflage in einer Nut 44 auf der Oberseite 46 des als Doppel-T-Profil ausgebildeten dritten Trägers 34 gelagert ist. Die Lagerung des ersten Trägers 26 auf dem vierten Träger 36 ist spiegelbildlich gleich.

In Figur 2 ist eine der ersten Greifeinrichtungen 24 dargestellt, welche den Index a trägt. Die Greifeinrichtung 24a ist über eine Halterung 48 an der zur Sägelinie 12 hin weisenden Vorderseite 50 des ersten Trägers 26 gehaltert. Die Halterung umfasst ein am ersten Träger 26 starr befestigtes Basisteil 52, an dem eine Kolbenstange (nicht sichtbar) eines Pneumatikzylinders 54 befestigt ist. Das Zylindergehäuse (ohne Bezugszeichen) des Pneumatikzylinders 54 ist mit dem oberen Ende einer Verlängerung 56 verbunden, an deren unterem Ende die erste Greifeinrichtung 24a befestigt ist. Die Verlängerung 56 ist, von der Seite beziehungsweise in Längsrichtung des ersten Trägers 26 gesehen, am Basisteil 52 schräg geführt, und zwar befindet sich das obere Ende in Vorschubrichtung 22 gesehen weiter hinten als das untere Ende. Entsprechend ist auch der Pneumatikzylinder 54 schräg angeordnet.

Dies hat zur Folge, dass bei einer Betätigung des Pneumatikzylinders 54 die Verlängerung 56 mit der ersten Greifeinrichtung 24 nicht nur nach oben, sondern, in Vorschubrichtung 22 gesehen, auch nach hinten bewegt wird. Die abgesenkte vordere Stellung wird dabei als "Vorschubstellung" bezeichnet, sie ist in Figur 2 dargestellt. Die angehobene und zurückgesetzte Position wird als "Ruhestellung" bezeichnet. Von den sieben ersten Greifeinrichtungen 24a bis 24g können nur die vier Greifeinrichtungen 24a bis 24d, die zu der zweiten Vorschubeinrichtung 28 wenigstens in etwa benachbart sind, von einer vorderen Vorschubstellung in eine hintere Ruhestellung und zurück bewegt werden. Die anderen ersten Greifeinrichtungen 24e bis 24g haben Ruhestellung und Vorschubstellung senkrecht übereinander liegend.

Der zweite Träger 30 der zweiten Vorschubeinrichtung 28 ist als Schlitten ausgeführt, der an einer in Figur 2 nicht sichtbaren Schiene an der Unterseite des dritten Trägers 34 längsverschieblich geführt ist. An der zum Vorschubbereich 38 weisenden Innenseite des zweiten Trägers 30 ist eine sich in vertikaler Richtung erstreckende Linearführung 58 außerhalb des Arbeitsbereichs 42 angeordnet. An dieser ist eine Führungsplatte 60 der zweiten Greifeinrichtung 32 verschieblich gehalten. In einem rechten Winkel zu der Führungsplatte 60 ist eine sich einwärts zum Vorschubbereich 38 erstreckende Halteplatte 62 befestigt, an deren in Vorschubrichtung 22 weisender Seite wiederum eine hintere Stirnseite (ohne Bezugszeichen) eines länglichen kastenförmigen Gehäuses 64 der zweiten Greifeinrichtung 32 starr befestigt ist.

Beide Greifeinrichtungen 24 und 32 weisen an ihrem in Vorschubrichtung 22 zeigenden Ende obere und untere Greifbacken auf. Während die unteren Greifbacken starr sind, können die oberen Greifbacken in vertikaler Richtung bewegt werden. Auf diese Weise können zwischen den Greifbacken einer Greifeinrichtung 24 und 32 Werkstücke verklemmt werden, die in Figur 2 exemplarisch dargestellt und mit 18b beziehungsweise 18c bezeichnet sind. Die unteren Greifbacken der Greifeinrichtungen 24 und 32 sind von diesen Werkstücken 18b und 18c verdeckt, die oberen Greifbacken sind mit 66 und 68 bezeichnet. Die in Figur 2 dargestellte und gegenüber dem Schlitten 30 abgesenkte Position der zweiten Greifeinrichtung 32 wird ebenfalls als "Vorschubstellung" bezeichnet, wohingegen die gegenüber dem Schlitten 30 angehobene Position, in die sie mittels einer nicht dargestellten Stelleinrichtung bewegt werden kann, als "Ruhestellung" bezeichnet wird.

Man erkennt aus den Figuren 1 und 2, dass der zweite Breitenbereich 42, der durch die Breite der zweiten Greifeinrichtung 32 definiert ist, deutlich kleiner ist als der erste Breitenbereich 40, in dem die ersten Greifeinrichtungen 24a bis 24g mindestens während einer Vorschubbewegung angeordnet sind. In der vorliegend gezeigten Ausführungsform beträgt die Breite des zweiten Breitenbereichs 42 nur ungefähr 4% des sich aus erstem Breitenbereich 40 und zweitem Breitenbereich 42 zusammensetzenden Vorschubbereichs 38.

Ferner geht insbesondere aus Figur 2 hervor, dass die Höhe eines Freiraums (ohne Bezugszeichen) unterhalb der zweiten Greifeinrichtung 32 in deren angehobener Ruhestellung ungefähr der maximalen Höhe eines von der ersten Greifeinrichtung 24 greifbaren Stapels von Werkstücken 18b entspricht. In gleicher Weise gilt, dass die Höhe eines Freiraums zwischen der Unterseite der ersten Greifeinrichtung 24 und dem Auflagetisch 16, in der angehobenen Ruhestellung der ersten Greifeinrichtung 24, ungefähr der maximalen Höhe eines von der zweiten Greifeinrichtung 32 greifbaren Stapels von Werkstücken 18c entspricht.

Die in Figur 1 gezeigte Plattenaufteilanlage 10 weist auf der vom Auflagetisch 16 abgewandten Seite der Sägelinie 12 beziehungsweise des Druckbalkens 14 einen aus mehreren Einzelteilen bestehenden Entnahmetisch 70 auf. Von diesem können, wie weiter unten noch im Detail ausgeführt werden wird, die von der Säge aufgeteilten Werkstücke 18 von einer Bedienperson der Plattenaufteilanlage 10 entnommen oder für eine weitere Aufteilung der ersten Vorschubeinrichtung 20 und/oder der zweiten Vorschubeinrichtung 28 erneut zugeführt werden.

Ferner verfügt die Plattenaufteilanlage 10 im Bereich des Auflagetisches 16 über einen Drehtisch 72. Der bei einer Drehung des Drehtisches 72 umstrichene maximale Außenradius ist in Figur 1 durch eine strichpunktierte Linie mit dem Bezugszeichen 74 angedeutet. Außerdem sind zum einen am Druckbalken 14 und zum anderen am ersten Träger 26 jeweils zwei Ausrichtanschläge 76 vorhanden, die ähnlich wie die Greifeinrichtungen 24 und 32 von einer abgesenkten Arbeitsposition in eine angehobene Ruhestellung und zurück bewegt werden können.

Ein Verfahren zum Aufteilen des in Figur 1 gezeigten Stapels von Werkstücken 18a wird nun unter Bezugnahme auf die Figuren 1 und 3 bis 7 beschrieben: in der in Figur 1 gezeigten Ausgangsstellung befindet sich die erste Vorschubeinrichtung 20 am hinteren Ende des Auflagetischs 16, wohingegen sich die zweite Vorschubeinrichtung 28 in der Nähe der Sägelinie 12 befindet. Die ersten Greifeinrichtungen 24a bis 24d sind ebenso wie die zweite Greifeinrichtung 32 in ihrer angehobenen Ruhestellung.

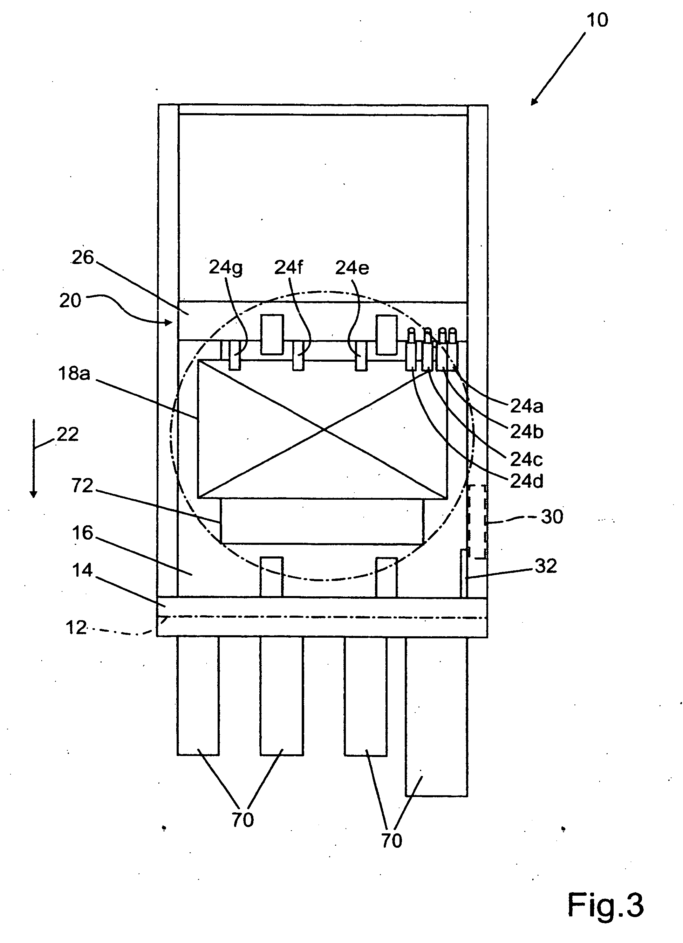

Die erste Vorschubeinrichtung 20 wird nun in Vorschubrichtung 22 bei abgesenkten und (in Vorschubrichtung gesehen) vorne fahrenden Ausrichtanschlägen 76 bewegt, bis der Stapel mit den Werkstücken 18a zwischen den Ausrichtanschlägen 76 ausgerichtet ist. Nun fährt die Vorschubeinrichtung 20 vor, bis die Werkstücke auf dem Auflagetische 16 liegen. Dann werden die Ausrichtanschläge 76 bei vorwärts fahrender Vorschubvorrichtung 20 zurückgezogen, bis die Werkstücke an den zuvor geöffneten Greifeinrichtungen 24a bis 24g anliegen. Nun werden die Greifeinrichtungen 24a bis 24g geschlossen. Dies ist in Figur 3 dargestellt.

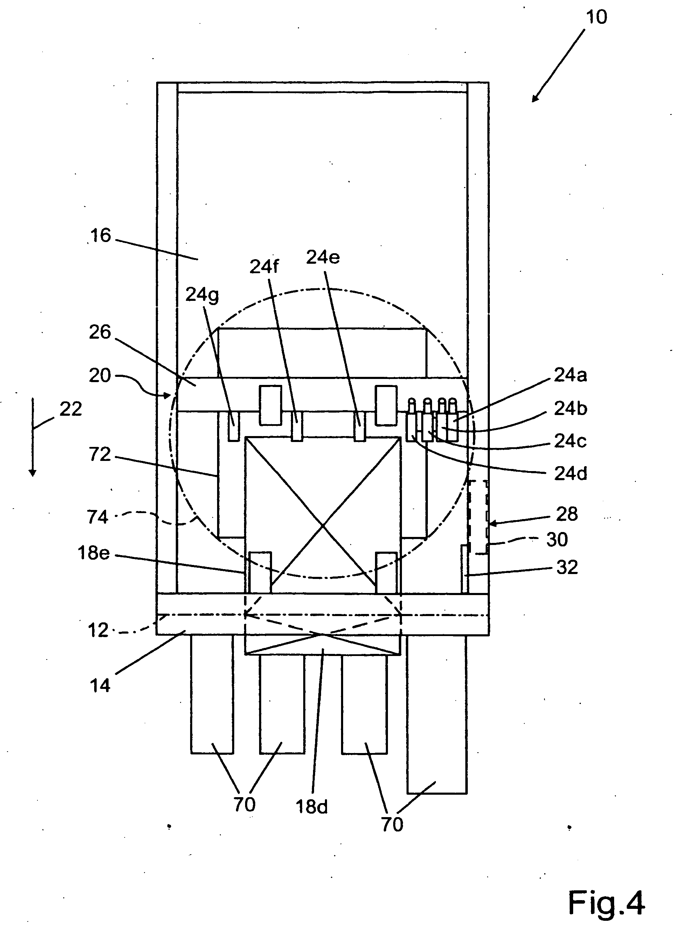

Die ersten Greifeinrichtungen 24a bis 24g geben den Stapel mit den Werkstücken 18a nun frei, und die erste Vorschubeinrichtung 20 fährt nach hinten mindestens so weit, dass sich keine der ersten Greifeinrichtungen 24a bis 24g innerhalb der Radiuslinie 74 befindet. Der Stapel mit den Platten 18a wird nun gedreht, so dass der Stapel sich in Längsrichtung des Auflagetisches 16 erstreckt. Jetzt fährt die erste Vorschubeinrichtung 20 wieder in Vorschubrichtung 22, greift mit den ersten Greifeinrichtungen 24e und 24f den hinteren Rand des gedrehten Stapels von Werkstücken 18a und bewegt ihn zur Sägelinie 12. Es werden also in diesen Abläufen nur jene Greifeinrichtungen 24a bis 24g geschlossen, die gerade im Bereich des Werkstückstapels 18a sind. Dort wird ein sogenannter "Kopfschnitt" ausgeführt, das entsprechende Kopfstück ist in Figur 4 mit 18d bezeichnet, der Reststapel mit 18e.

Während die erste Vorschubeinrichtung 20 entgegen der Vorschubrichtung 22 zurück fährt und dabei den Reststapel 18e bis zum Drehtisch 72 mitnimmt, entnimmt die Bedienperson der Plattenaufteilanlage 10 den Kopfschnitt 18d vom Entnahmetisch 70, dreht ihn um 90°, steuert die zweite Vorschubeinrichtung 28 so an, dass die zweite Greifeinrichtung 32 in ihre abgesenkte Vorschubstellung bewegt wird, führt den Kopfschnitt 18d der zweiten Greifeinrichtung 32 zu, und veranlasst, dass die zweite Greifeinrichtung 32 schließt. Dann wird die zweite Vorschubeinrichtung 28 zurückgefahren und anschließend wieder in Vorschubrichtung 22 bei aktivierter Sägeeinrichtung bewegt. Hierdurch wird der Kopfschnitt 18d in Endstücke 18f aufgeteilt.

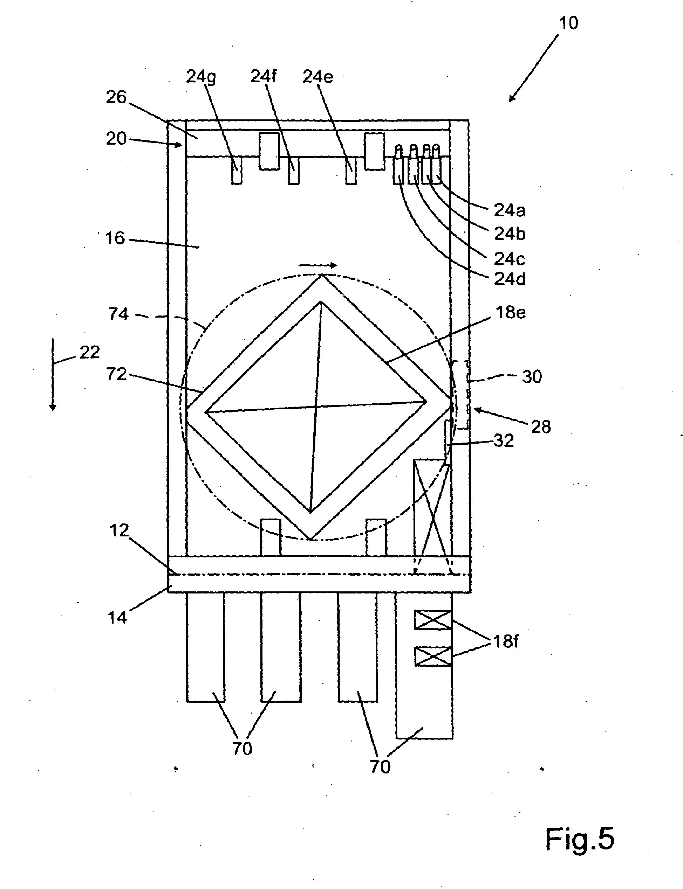

Sobald die zweite Vorschubeinrichtung 28 sich so weit in Vorschubrichtung 22 bewegt hat, dass sie sich außerhalb der Radiuslinie 74 befindet, wird der Drehtisch 72 aktiviert und der dort befindliche Reststapel 18e um 90° gedreht. Dieser Zustand ist in Figur 5 gezeigt. Es versteht sich, dass der Reststapel 18e zuvor von den ersten Greifeinrichtungen 24e und 24f freigegeben wurde und die erste Vorschubeinrichtung 20 nach hinten aus dem Bereich der Radiuslinie 74 herausbewegt wurde.

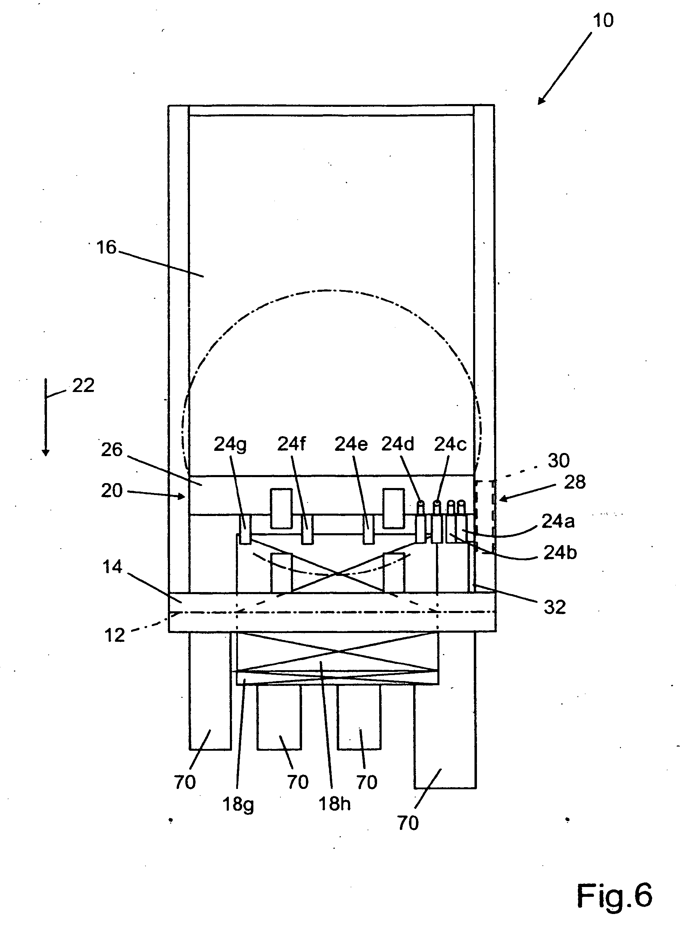

Der nun gedrehte Reststapel 18e wird nun wieder von den ersten Greifeinrichtungen 24c bis 24g gegriffen, und dann wird die erste Vorschubeinrichtung 20 in Vorschubrichtung 22 zur Sägelinie 12 hin bewegt, wo der Reststapel 18e in Streifen 18g und 18h aufgeteilt wird. Dies ist in Figur 6 gezeigt. Die zweite Vorschubeinrichtung 28 befindet sich während dessen in ihrer zur Sägelinie 12 benachbarten Position, und die zweite Greifeinrichtung 32 in ihrer angehobenen Ruhestellung. Die Reststreifen 18g und 18h werden von der Bedienperson der Plattenaufteilanlage 10 auf dem Entnahmetisch 70 um 90° gedreht und wieder den beiden Vorschubeinrichtungen 20 und 28 zugeführt.

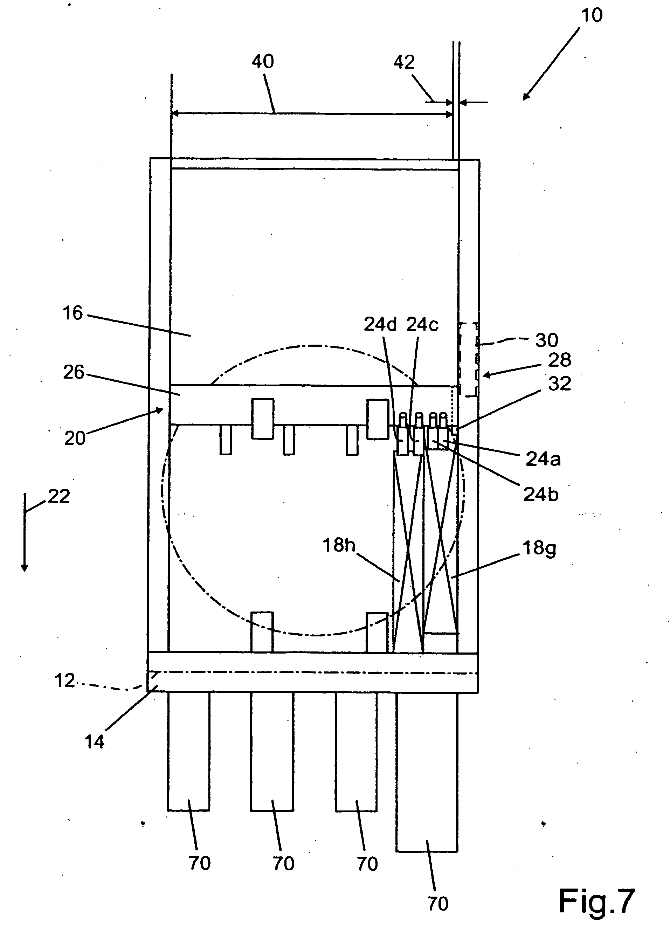

Wie aus Figur 7 ersichtlich ist, ist der in dieser Figur äußerste rechte Reststreifen 18g breiter als der zweite Breitenbereich 42 beziehungsweise breiter als die zweite Greifeinrichtung 32. Dieser Reststreifen 18g wird dennoch von der zweiten Greifeinrichtung 32 erfasst. Damit seine Bewegung jedoch von der ersten Vorschubeinrichtung 20 nicht behindert wird, werden die zweiten Greifeinrichtungen 24a und 24b in ihre angehobene Ruhestellung bewegt. Der in Figur 7 linke Reststreifen 18h wird von dem beiden zweiten Greifeinrichtungen 24c und 24d gegriffen. Die beiden Vorschubeinrichtungen 20 und 28 werden nun unabhängig voneinander in Vorschubrichtung 22 in Richtung der Sägelinie 12 bewegt, so dass bei einem Schnitt der Säge unterschiedlich lange Stücke von den beiden Reststreifen 18g und 18h abgetrennt werden.

In einem nicht gezeigten Ausführungsbeispiel ist es auch möglich, dass ein Stapel von Werkstücken von den ersten Greifeinrichtungen 24 gegriffen wird und sich in den zweiten Breitenbereich 42 hinein erstreckt. Damit die Bewegung der ersten Vorschubeinrichtung 20 durch die zweite Greifeinrichtung 32 nicht behindert wird, wird letztere dann in ihre angehobene Ruhestellung bewegt.

Ein erkennbarer Vorteil der beschriebenen Plattenaufteilanlage 10 besteht auch darin, dass, während die zweite Vorschubeinrichtung 28 mit der zweiten Greifeinrichtung 32 ein oder mehrere Werkstücke 18 abarbeitet, die erste Vorschubeinrichtung 20 schon entgegen der Vorschubrichtung 22 bewegt werden kann, um einen neuen Werkstückstapel 18 abzuholen, zu greifen, zu drehen, auszurichten, etc. Dadurch können die Wartezeit für die Säge reduziert und der Ausstoß erhöht werden.

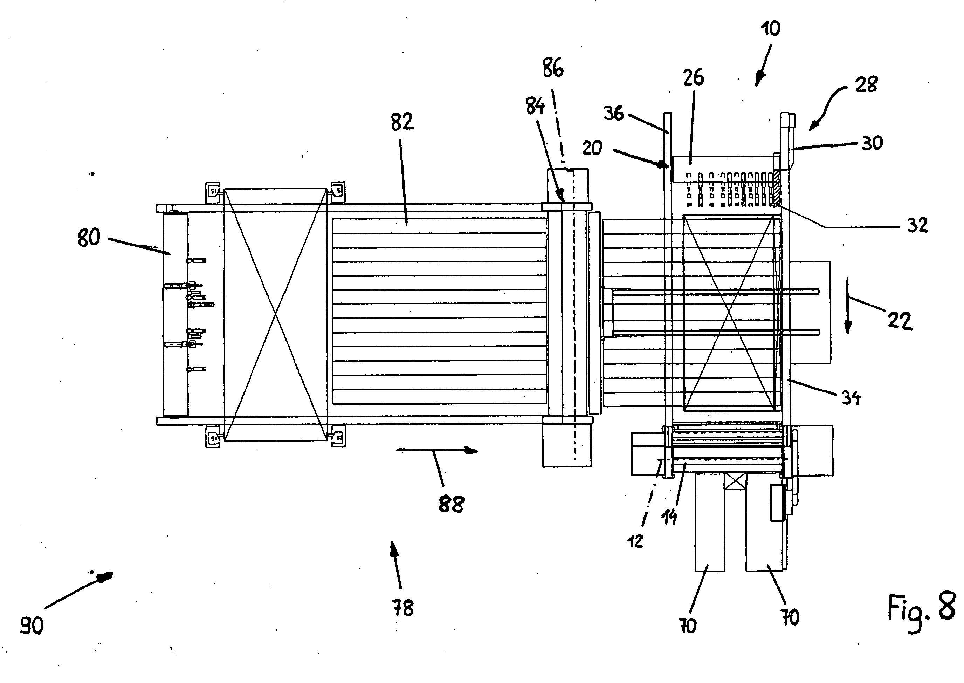

Eine weitere Ausführungsform ist in Figur 8 dargestellt. In dieser tragen solche Elemente und Bereiche, die äquivalente Funktionen zu bereits beschriebenen Elementen und Bereichen aufweisen, die gleichen Bezugszeichen. Sie sind nicht nochmals im Detail beschrieben.

In Figur 8 ist die Plattenaufteilanlage 10 in Form einer Queraufteilanlage 10 als Unterkomponente in eine Winkelanlage 90 integriert. Die Winkelanlage 90 umfasst zusätzlich eine Längsaufteilanlage 78 mit einer Vorschubvorrichtung 80, einem Auflagetisch 82 und einer Längssäge 84 mit einer Sägelinie 86. Die Vorschubrichtung der Längsaufteilanlage 78 ist durch einen Pfeil 88 bezeichnet. Sie liegt in einem Winkel von ungefähr 90° zur Vorschubrichtung 22 der Queraufteilanlage 10. Gleiches gilt für die Relativlage der beiden Sägelinien 12 und 86.

Mit der in Figur 8 gezeigten Winkelanlage 90 wird zunächst in der Längsaufteilanlage 78 von einer großformatigen Platte oder einem Stapel von großformatigen Platten ein erstes Teilstück bzw. ein erster Teilstapel abgesägt. Dieses bzw. dieser wird dann auf den Auflagetisch 16 der Queraufteilanlage 10 transportiert und dort gemäß dem in Zusammenhang mit den Figuren 1 bis 7 beschriebenen Verfahren aufgeteilt.

Bei einer zeichnerisch nicht dargestellten Ausführungsform sind der erste Träger und der zweite Träger nebeneinander angeordnet. Die beiden Träger überlappen sich also nicht, und zwar derart, dass der erste Träger seitlich vom zweiten Breitenbereich bzw. seitlich von der zweiten Greifeinrichtung angeordnet ist. Möglich wird dies beispielsweise, indem der dritte Träger sich über den zweiten Breitenbereich mit der zweiten Greifeinrichtung hinweg erstreckt, wobei ein ausreichender Freiraum für eine Bewegung der zweiten Greifeinrichtung bzw. eines von dieser transportierten Plattenstapels unterhalb jenes Bereichs des dritten Trägers, der sich über den zweiten Breitenbereich hinweg erstreckt, vorgesehen sein sollte.

## Patentansprüche

1. Plattenaufteilanlage (10) zum Aufteilen von plattenförmigen Werkstücken (18) entlang einer Sägelinie (12), mit einer ersten Vorschubeinrichtung (20) zum Bewegen von plattenförmigen Werkstücken (18) quer zu der Sägelinie (12), die einen quer zur Sägelinie (12) beweglichen ersten Träger (26) und eine Mehrzahl mit dem ersten Träger (26) verbundener erster Greifeinrichtungen (24) umfasst, und mit einer zweiten Vorschubeinrichtung (28) zum Bewegen von plattenförmigen Werkstücken (18) quer zur Sägelinie (12), die einen quer zur Sägelinie (12) beweglichen zweiten Träger (30) und mindestens eine mit dem zweiten Träger (26) verbundene zweite Greifeinrichtung (32) umfasst, und mit einem quer zu einer Vorschubrichtung (22) definierten Vorschubbereich (38), in dem die zu bewegenden Werkstücke (18) anordenbar sind und der quer zur Vorschubrichtung (22) einen ersten Breitenbereich (40), in dem die ersten Greifeinrichtungen (24) mindestens während einer Vorschubbewegung angeordnet sind, und einen zweiten Breitenbereich (42), in dem die zweite Greifeinrichtung (32) angeordnet ist, aufweist, wobei der zweite Träger (30) seitlich außerhalb von dem Vorschubbereich (38) angeordnet ist, und wobei die erste vorschubeinrichtung (20) und die zweite Vorschubeinrichtung (28) unabhängig voneinander bewegt werden können, **dadurch gekennzeichnet, dass**
a. der erste Breitenbereich (40) direkt an den zweiten Breitenbereich (42) angrenzt, wobei sich die Breitenbereiche (40, 42) nicht überlappen,
b. die zweite Greifeinrichtung (32) ständig seitlich an dem zweiten Träger (30) und auf diese Weise ständig in dem zweiten Breitenbereich (42) angeordnet ist,
c. die zweite Greifeinrichtung (32) gegenüber dem zweiten Träger (30) von einer abgesenkten Vorschubstellung in eine angehobene Ruhestellung und zurück bewegt werden kann, und
d. die Höhe eines Freiraums unterhalb der zweiten Greifeinrichtung (32) in deren angehobener Ruhestellung mindestens der maximalen Höhe eines von der ersten Greifeinrichtung (24) greifbaren Stapels von Werkstücken (18) entspricht.

2. Plattenaufteilanlage (10) nach Anspruch 1, **dadurch gekennzeichnet, dass** der erste Träger (26) und der zweite Träger (30) an einem parallel zur Vorschubrichtung (22) angeordneten gemeinsamen dritten Träger (34) verfahrbar gehalten sind.

3. Plattenaufteilanlage (10) nach Anspruch 2, **dadurch gekennzeichnet, dass** der erste Träger (26) in einer Nut (44) auf der Oberseite (46) und der zweite Träger (30) in einer Schiene an der Unterseite des dritten Trägers (34) gehalten ist.

4. Plattenaufteilanlage (10) nach einem der vorhergehenden Ansprüche, **dadurch gekennzeichnet, dass** mindestens eine der ersten Greifeinrichtungen (24), die zu der zweiten Greifeinrichtung (32) benachbart ist, gegenüber dem ersten Träger (26) von einer abgesenkten Vorschubstellung in eine angehobene Ruhestellung und zurück bewegt werden kann, und dass die Höhe eines Freiraums unterhalb der ersten Greifeinrichtung (24) in deren angehobener Ruhestellung mindestens der maximalen Höhe eines von der zweiten Greifeinrichtung (32) greifbaren Stapels von Werkstücken (18) entspricht.

5. Plattenaufteilanlage (10) nach Anspruch 4, **dadurch gekennzeichnet, dass** die Bewegungsrichtung der ersten Greifeinrichtung (24) von der Vorschubstellung in die Ruhestellung, in Vorschubrichtung (22) gesehen, nach schräg hinten verläuft.

6. Plattenaufteilanlage (10) nach einem der vorhergehenden Ansprüche, **dadurch gekennzeichnet, dass** der zweite Breitenbereich (42) eine Breite von weniger als 10 %, insbesondere eine Breite von ungefähr 4 % des Vorschubbereichs (38) aufweist.

7. Plattenaufteilanlage (10) nach einem der vorhergehenden Ansprüche, **dadurch gekennzeichnet, dass** sie Teil einer Winkelanlage (90) ist.

8. Plattenaufteilanlage nach einem der vorhergehenden Ansprüche, **dadurch gekennzeichnet, dass** der erste Träger seitlich vom zweiten Breitenbereich angeordnet ist.

9. Verfahren zum Betreiben einer Plattenaufteilanlage (10) nach einem der vorhergehenden Ansprüche, **dadurch gekennzeichnet, dass** die erste Vorschubeinrichtung (20) an einem ersten Werkstück (18h) beziehungsweise Werkstückstapel angreift, und/oder dass die zweite Vorschubeinrichtung (28) an einem zweiten Werkstück (18g) beziehungsweise Werkstückstapel angreift.

10. Verfahren nach Anspruch 9, **dadurch gekennzeichnet, dass** sich das erste Werkstück bzw. der erste Werkstückstapel in den zweiten Breitenbereich hinein erstreckt.

11. Verfahren nach einem der Ansprüche 9 oder 10, **dadurch gekennzeichnet, dass** sich das zweite Werkstück (18g) beziehungsweise der zweite Werkstückstapel in den ersten Breitenbereich (40) hinein erstreckt.

12. Verfahren nach einem der Ansprüche 9 bis 11 **dadurch gekennzeichnet, dass** die zweite Vorschubeinrichtung (28) in der Ruhestellung der zweiten Greifeinrichtung (32) in eine Position bewegt wird, die in der Nähe eines Bearbeitungsbereichs, insbesondere in der Nähe einer Sägelinie (12) liegt.

## Claims

1. A plate-partitioning facility (10) for partitioning plate-shaped workpieces (18) along a sawing line (12), having a first advancement device (20) for moving plate-shaped workpieces (18) transversely to the sawing line (12), which device has a first support (26), which can be moved transversely in relation to the sawing line (12), and a plurality of first gripper devices (24) connected with the first support (26), and having a second advancement device (28) for moving plate-shaped workpieces (18) transversely to the sawing line (12), which device has a second support (30), which is movable transversely to the sawing line (12), and at least one second gripper device (32) connected with the second support (30), and having an advancement area (38) defined transversely in relation to the advancement direction (22), in which the workpieces (18) to be moved can be arranged, and which has a first wide area (40) transversely to the advancement direction (22), in which the first gripper devices (24) are arranged at least during an advancement movement, and a second wide area (42), in which the second gripper device (32) is arranged, wherein the second support (30) is arranged laterally outside of the advancement area (38), and wherein the first advancement device (20) and the second advancement device (28) can be moved independently of each other, **characterized in that**
a. the first wide area (40) directly abuts the second wide area (42), wherein the wide areas (40, 42) do not overlap,
b. the second gripper device (32) is always arranged laterally of the second support (30), and in this way always in the second wide area (42),
c. in respect to the second support (30), the second gripper device (32) can be moved from a lowered advancement position into a lifted position of rest and vice versa, and
d. in the position of rest of the second gripper device (32), the height of a free space underneath it corresponds at least to the maximum height of a stack of workpieces (18) which can be gripped by the first gripper device (24).

2. The plate-partitioning facility (10) in accordance with claim 1, **characterized in that** the first support (26) and the second support (30) are movably maintained on a common third support (34) arranged parallel in respect to the advancement direction (22).

3. The plate-partitioning facility (10) in accordance with claim 2, **characterized in that** the first support (26) is held in a groove (44) on the top (46) of the third support (34), and the second support (30) in a rail on the underside of the third support (34).

4. The plate-partitioning facility (10) in accordance with one of the preceding claims, **characterized in that** at least one of the first gripper devices (24), which is located next to the second gripper device (32), can be moved in respect to the first support (26) from a lowered advancement position into a lifted position of rest, and vice versa, and that the height of a free space underneath the first gripper device (24) in its lifted position of rest corresponds to at least the maximum height of a stack of work pieces (18) which can be gripped by the second gripper device (32).

5. The plate-partitioning facility (10) in accordance with claim 4, **characterized in that**, viewed in the advancement direction, the direction of movement of the first gripper device (24) from the advancement direction into the position of rest extends obliquely backward.

6. The plate-partitioning facility (10) in accordance with one of the preceding claims, **characterized in that** the second wide area (42) has a width of less than 10%, in particular a width of approximately 4% of the advancement area (38).

7. The plate-partitioning facility (10) in accordance with one of the preceding claims, **characterized in that** it is a part of an angled facility (90).

8. The plate-partitioning facility (10) in accordance with one of the preceding claims, **characterized in that** the first support is arranged laterally of the second wide area.

9. A method for operating a plate-partitioning facility (10) in accordance with one of the preceding claims, **characterized in that** the first advancement device (20) acts on a first workpiece (18h), or respectively stack of workpieces, and/or that the second advancement device (28) acts on a second workpiece (18g), or respectively stack of workpieces.

10. The method in accordance with claim 9, **characterized in that** the first workpiece, or respectively the first stack of workpieces, extends into the second wide area.

11. The method in accordance with one of claims 9 or 10, **characterized in that** the second workpiece (18g), or respectively the second stack of workpieces, extends into the second wide area.

12. The method in accordance with one of claims 9 to 11, **characterized in that**, in the position of rest of the second gripper device (32), the second advancement device (28) is moved into a position which is located in the vicinity of a processing area, in particular a sawing line (12).

## Revendications

1. Dispositif de positionnement de panneaux (10) destiné à positionner des pièces (18) en forme de panneaux le long d'une ligne de sciage (12), comportant un premier dispositif d'avance (20) destiné à déplacer les pièces (18) en forme de panneaux transversalement à la ligne de sciage (12), lequel comporte un premier support (26), mobile transversalement à la ligne de sciage (12), et une pluralité de premiers dispositifs de préhension (24) reliés au premier support (26), et comportant un deuxième dispositif d'avance (28) destiné à déplacer les pièces (18) en forme de panneaux transversalement à la ligne de sciage (12), lequel comporte un deuxième support (30), mobile transversalement à la ligne de sciage (12), et au moins un deuxième dispositif de préhension (32) relié au deuxième support (30), et comportant une zone d'avance (38), définie transversalement à une direction d'avance (22), dans laquelle peuvent être disposées les pièces (18) à déplacer et laquelle comporte, transversalement à la direction d'avance (22), une première zone de largeur (40), dans laquelle sont disposés les premiers dispositifs de préhension (24) au moins pendant un mouvement d'avance, et une deuxième zone de largeur (42), dans laquelle est disposé le deuxième dispositif de préhension (32), le deuxième support (30) étant disposé latéralement hors de la zone d'avance (38), et le premier dispositif d'avance (20) et le deuxième dispositif d'avance (28) pouvant être déplacés indépendamment l'un de l'autre, **caractérisé en ce que**
a. la première zone de largeur (40) est directement adjacente à la deuxième zone de largeur (42), les zones de largeur (40, 42) ne se chevauchant pas,
b. le deuxième dispositif de préhension (32) est disposé en permanence à côté du deuxième support (30) et, de cette manière, est disposé en permanence dans la deuxième zone de largeur (42),
c. le deuxième dispositif de préhension (32) peut être amené, par rapport au deuxième support (30), depuis une position d'avance abaissée dans une position de repos relevée et inversement, et
d. la hauteur d'un dégagement en dessous du deuxième dispositif de préhension (32) dans sa position de repos relevée correspond au moins à la hauteur maximale d'une pile de pièces (18) aptes à être saisies par le premier dispositif de préhension (24).

2. Dispositif de positionnement de panneaux (10) selon la revendication 1, **caractérisé en ce que** le premier support (26) et le deuxième support (30) sont montés de manière mobile sur un troisième support (34) commun, disposé parallèlement à la direction d'avance (22).

3. Dispositif de positionnement de panneaux (10) selon la revendication 2, **caractérisé en ce que** le premier support (26) est maintenu dans une rainure (44) sur la face supérieure (46), et le deuxième support (30) est maintenu dans un rail sur la face inférieure du troisième support (34).

4. Dispositif de positionnement de panneaux (10) selon l'une quelconque des revendications précédentes, **caractérisé en ce qu'**au moins un des premiers dispositifs de préhension (24), qui est adjacent au deuxième dispositif de préhension (32), peut être déplacé par rapport au premier support (26) depuis une position d'avance abaissée dans une position de repos relevée et inversement, et **en ce que** la hauteur d'un dégagement en dessous du premier dispositif de préhension (24) dans sa position de repos relevée correspond au moins à la hauteur maximale d'une pile de pièces (18) aptes à être saisies par le deuxième dispositif de préhension (32).

5. Dispositif de positionnement de panneaux (10) selon la revendication 4, **caractérisé en ce que** la direction de déplacement du premier dispositif de préhension (24) depuis la position d'avance dans la position de repos s'étend en oblique vers l'arrière, par référence à la direction d'avance (22).

6. Dispositif de positionnement de panneaux (10) selon l'une quelconque des revendications précédentes, **caractérisé en ce que** la deuxième zone de largeur (42) a une largeur inférieure à 10 %, en particulier une largeur de 4 % environ de la zone d'avance (38).

7. Dispositif de positionnement de panneaux (10) selon l'une quelconque des revendications précédentes, **caractérisé en ce qu'**il constitue une partie d'un dispositif angulaire (90).

8. Dispositif de positionnement de panneaux selon l'une quelconque des revendications précédentes, **caractérisé en ce que** le premier support est disposé latéralement par rapport à la deuxième zone de largeur.

9. Procédé de fonctionnement d'un dispositif de positionnement de panneaux (10) selon l'une quelconque des revendications précédentes, **caractérisé en ce que** le premier dispositif d'avance (20) saisit une première pièce (18b) ou pile de pièces, et/ou **en ce que** le deuxième dispositif d'avance (28) saisit une deuxième pièce (18g) ou pile de pièces.

10. Procédé selon la revendication 9, **caractérisé en ce que** la première pièce ou la première pile de pièces s'étend vers l'intérieur de la deuxième zone de largeur.

11. Procédé selon la revendication 9 ou 10, **caractérisé en ce que** la deuxième pièce (18g) ou la deuxième pile de pièces s'étend vers l'intérieur de la première zone de largeur (40).

12. Procédé selon l'une quelconque des revendications 9 à 11, **caractérisé en ce que** le deuxième dispositif d'avance (28), dans la position de repos du deuxième dispositif de préhension (32), est déplacé dans une position qui se situe à proximité d'une zone d'usinage, en particulier à proximité d'une ligne de sciage (12).
